(19) Europäisches Patentamt / European Patent Office / Office européen des brevets

(11) **EP 2 598 836 B1**

(12) **EUROPÄISCHE PATENTSCHRIFT**

(45) Veröffentlichungstag und Bekanntmachung des Hinweises auf die Patenterteilung:
**04.06.2014  Patentblatt 2014/23**

(51) Int Cl.:
***G01B 11/25*** *(2006.01)*

(21) Anmeldenummer: **11735670.9**

(22) Anmeldetag: **26.07.2011**

(86) Internationale Anmeldenummer:
**PCT/EP2011/062846**

(87) Internationale Veröffentlichungsnummer:
**WO 2012/013686 (02.02.2012 Gazette 2012/05)**

(54) **ERMITTLUNG VON DEFOKUSSIERTEN REFLEXIONSKARTEN FÜR DIE ROBUSTE BESTIMMUNG VON "SHAPE FROM FOCUS" IN MIKROSKOPBILDERN**

ASCERTAINMENT OF DEFOCUSED REFLECTION MAPS FOR THE ROBUST DETERMINATION OF "SHAPE FROM FOCUS" IN MICROSCOPY IMAGES

DÉTERMINATION DE CARTES DE RÉFLEXION DÉFOCALISÉES POUR LA DÉTERMINATION STABLE DE « SHAPE FROM FOCUS » DANS DES IMAGES MICROSCOPIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2010   AT 12602010**

(43) Veröffentlichungstag der Anmeldung:
**05.06.2013   Patentblatt 2013/23**

(73) Patentinhaber:
• **Alicona Imaging GmbH**
  **8074 Grambach bei Graz (AT)**
• **Technische Universität Graz**
  **8010 Graz (AT)**

(72) Erfinder:
• **PRANTL, Manfred**
  **A-8044 Graz (AT)**
• **SCHERER, Stefan**
  **A-8010 Graz (AT)**
• **LENZ, Martin**
  **8142 Wundschuh (AT)**
• **RÜTHER, Matthias**
  **A-8010 Graz (AT)**
• **BISCHOF, Horst**
  **A-8063 Eggersdorf b. Graz (AT)**

(74) Vertreter: **Margotti, Herwig Franz**
  **Schwarz & Partner**
  **Patentanwälte**
  **Wipplingerstrasse 30**
  **1010 Wien (AT)**

(56) Entgegenhaltungen:
**US-A- 5 381 236    US-A- 5 608 529**

• **NAYAR S K ED - INSTITUTE OF ELECTRICAL AND ELECTRONICS ENGINEERS: "Shape from focus system", PROCEEDINGS OF THE COMPUTER SOCIETY CONFERENCE ON COMPUTER VISION AND PATTERN RECOGNITION. CHAMPAIGN, IL, JUNE 15 - 18, 1992; [PROCEEDINGS OF THE COMPUTER SOCIETY CONFERENCE ON COMPUTER VISION AND PATTERN RECOGNITION], NEW YORK, IEEE, US, Bd. -, 15. Juni 1992 (1992-06-15), Seiten 302-308, XP010029341, DOI: 10.1109/CVPR.1992.223259 ISBN: 978-0-8186-2855-9**

**Beschreibung**

Die Erfindung betrifft ein Verfahren zum Ausgleichen von Beleuchtungsdefiziten bei mikroskopischem "Shape from Focus (SFF)".

"Shape from focus (SFF)" ist eine der populärsten 3D Rekonstruktionsmethoden in optischer Mikroskopie. Die Arbeitsweise beruht auf der Bestimmung des Fokusmaximums von Objektpunkten durch die Aufnahme eines Bilderstapels. Die Aufnahme des Bilderstapels erfolgt durch die kontrollierte Bewegung des Objektes relativ zum Mikroskopobjektiv, sodass das Maximum des Fokuswertes in eine Tiefeninformation umgerechnet werden kann. Das Fokusmaß wird üblicherweise aus den Bilddaten durch die Betrachtung einer lokalen Umgebung an jedem Pixel gebildet. Es ergibt sich aus dem Grad an hochfrequenten Bildanteilen in dieser Umgebung bzw. indirekt, aus dem Wert der Bildgradienten oder dem lokalen Kontrast.

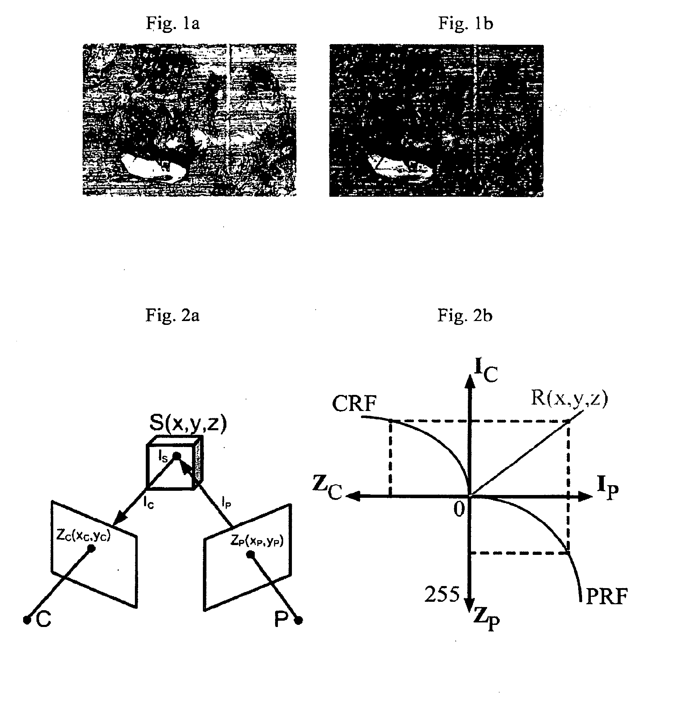

Gesättigte Bildregionen stellen die größte Herausforderung für "shape from focus" Verfahren dar und resultieren oftmals in verrauschten oder lediglich dünn besetzten Rekonstruktionsergebnissen. Solche Bildregionen sind in industriellen 3D Messaufgaben häufig anzutreffen, aufgrund von spiegelnden Reflexionen und Abschattungseffekten. Um dieses Problem zu verbessern, führen wir ein neuartiges Konzept ein, die defokussierte Reflexionskarte (DRK). Eine DRK kann als ein beleuchtungsneutrales Bild des Objektes interpretiert werden (siehe auch Fig. 1), wobei das gleiche Maß an Defokussierung wie im ursprünglichen Kamerabild vorhanden ist. Unser Ansatz besteht nun darin, die Kamerarohdaten durch einen Bilderstapel von DRKs zu ersetzen und "shape from focus" auf diesen durchzuführen. Dies erlaubt es uns mit einer erhöhten Dynamik in der betrachteten Szene umzugehen, das Fokusmaximum damit robuster zu bestimmen und schlussendlich eine dichtere Objektrekonstruktion zu erlangen.

Die Abschätzung eines Pixelwertes in einer DRK erfordert die Kenntnis, wie viel Licht auf einen Objektpunkt auftrifft $I_i$ und wie viel Licht davon wieder rückgestrahlt wird $I_r$. Für den Fall, dass die Szenengeometrie nicht bekannt ist, kann $I_r$ nicht aus dem Kamerabild abgeschätzt werden, da der Grad der Defokussierung an einem Bildpunkt nicht bekannt ist.

Dies macht die Aufgabenstellung "schlecht-konditioniert". Das Problem wird noch dadurch verschärft, wenn die Beleuchtung der Szene lokal moduliert wird, um große Helligkeitsunterschiede auf dem Objekt auszugleichen.

Der Erfindung liegt die Aufgabe zugrunde eine approximierte DRK auf iterative Art und Weise aus einem bekannten Beleuchtungsmuster und dem zugehörigen Kamerabild einer Szene abzuschätzen. Das Resultat sollte folgende Eigenschaften aufweisen: Korrektheit des Fokusmaximums; Unterdrückung von Sättigungseffekten und Stabilität des Fokusmaßes in fokussierten Regionen bei variierender Beleuchtung. Die Korrektheit der Reflexionsschätzung an und für sich, speziell in den defokussierten Regionen, hat sich als nicht so wichtig gezeigt, wodurch sich das Schätzproblem vereinfacht und wir gemäß der Erfindung zu einer vernünftigen Abschätzung der Werte in lediglich zwei Iterationen gelangen.

Sowohl die Machbarkeit als auch der Nutzen unserer Methode werden mit Hilfe von synthetischen als auch realen Daten evaluiert. Wir zeigen, dass unser System mikroskopische 3D Rekonstruktionen in Bereichen ohne Sättigungseffekte mindestens genauso gut erledigt, wie Standard "shape from focus" und dass unser Ansatz dem Standardalgorithmus bei spiegelnden Oberflächen deutlich überlegen ist.

Die vorliegende Erfindung beschäftigt sich auf dem Gebiet erstmals mit den Einschränkungen und der Verbesserung von Standard "shape from focus" Rekonstruktionsmethoden mit Hilfe von dynamischer Szenenbeleuchtung durch ein Projektor-Kamerasystem.

Ein traditioneller "shape from focus" Ansatz wird in [1] beschrieben. Das dort verwendete Fokusmaß beruht auf dem Laplacefilter. Der beschriebene Algorithmus zur Schätzung des Tiefenwertes beruht auf der Annahme einer Gaußverteilung der Fokuswerte innerhalb des Fokusvektors zur genaueren Bestimmung des Fokusmaximums. Um einen Überblick über Fokusmaße, Tiefenschätzalgorithmen und "shape from focus" Algorithmen zu erlangen, verweisen wir auf [2-5].

Literatur in Bezug auf radiometrische Beleuchtungskompensation wurde im Zusammenhang mit 3D Rekonstruktionsverfahren mittels strukturiertem Licht von Koninckx [6, 7] und Gu [8] publiziert; im Zusammenhang mit Multimediaprojektionen auf untexturierte oder dynamische Szenen von Nayar [9, 10] und Bimber [11-13].

Noguchi and Nayar [14] waren die Ersten, die sich mit dem Problem der Rekonstruktion von untexturierten Objektoberflächen mittels "shape from focus" beschäftigt haben. Der optische Pfad eines Lichtmikroskops wurde analytisch modelliert, und für ein bestimmtes Fokusmaß wurde ein optimales Filtermuster für den Lichtpfad ermittelt. Dieses Filtermuster wurde statisch auf das Objekt projiziert. Ihre Experimente zeigen gute Ergebnisse für industrielle Proben. Allerdings bleiben gesättigte Bildregionen, hervorgerufen durch z.B. Spiegelungen, problematisch.

Samson und Blance schlugen einen Algorithmus zur Kontrasterhöhung in der Lichtmikroskopie vor [15]. Es wird ein Projektionssystem zur Erzeugung von Beleuchtungsmustern verwendet, um die Bilderfassung von transparenten Proben zu optimieren. Das Licht wird dabei abhängig von der verwendeten Bilderfassung automatisch moduliert. Ihre Experimente zeigen eine Verbesserung bei Kontrast und Helligkeit.

Kürzlich wurde von Bimber et al. [16] ein Lichtmikroskopaufbau angekündigt, der einen Projektor als Lichtquelle verwendet, um Kontrast und Dynamikumfang für einen menschlichen Bediener in Echtzeit zu verbessern. Das System ist lediglich für die visuelle Beobachtung ausgelegt, und das Problem der Unschärfe von Bildern wurde nicht behandelt.

US 5 381 236 offenbart ein anderen Verfahren gemäß dem Stand der Technik.

Um die Limitierungen der traditionellen "shape from focus" Ansätze zu beseitigen, schlagen wir ein Lichtmikroskop mit einem Videobeamer als Lichtquelle vor. Einerseits kann mit diesem Ansatz in gesättigten Bildbereichen der Helligkeitsunterschied kompensiert werden, andererseits kann in texturlosen Bildbereichen damit Textur aufgebracht werden, um in diesen Regionen eine Rekonstruktion zu ermöglichen (siehe [14]). Theoretisch erfordert die Beleuchtungsadaption in gesättigten Bildbereichen die genaue Kenntnis der ganzen Projektor-Kamera Bildaufnahmekette, inklusive der Szenengeometrie und der radiometrischen Verhältnisse. Die radiometrischen Verhältnisse könnten noch durch Kalibration ermittelt werden, aber das erforderliche Wissen über die Szenengeometrie machen diese Aufgabenstellung "schlecht-konditioniert".

Anhand von Figuren und Figurenbeschreibungen werden Details der Erfindung und Hintergründe näher erläutert.

Es zeigt:

Fig 1a und 1b Rohdaten eines Kamerabildes (Fig. 1a) und defokussierte Reflexionskarte (Fig. 1b) einer mikroskopischen Aufnahme.

Fig. 2a und 2b Geometrische und radiometrische Beziehungen in einem Projektor-Kamerasystem [10][6]. Ein 3D Szenenpunkt S wird durch ein Projektorpixel mit der Position $(x_P, y_P)$ in der Bildebene des Projektors und der Helligkeit $Z_P$ beleuchtet (Fig. 2a). S wird auf ein Kamerapixel $(x_C, y_C)$ mit der resultierenden Helligkeit $Z_C$ abgebildet. In Fig. 2b ist die radiometrische Kette ausgehend von der diskreten Intensität $Z_P$ des Projektorpixels zur Projektorbestrahlungsstärke $I_P$, zur Kamerabestrahlungsstärke $I_C$ und zur diskreten Kameraintensität $Z_C$ skizziert. Die Abbildungen der diskreten Pixelwerte auf Beleuchtungsstärkewerte sowohl im Projektor als auch in der Kamera werden durch die Kameraübertragungsfunktion (engl. "camera response function") CRF und die Projektorübertragungsfunktion (engl. "projector response function") PRF modelliert. Die Reflektivität der Szene wird als linear angenommen. Sie beschreibt das Verhältnis zwischen eintreffender und rückgestrahlter Beleuchtungsstärke an der Probenoberfläche (d.h. Textur, Schattierungen und Spiegelungen).

Fig. 3 Ein Bildentstehungsmodell (engl. "image formation model" (IFM)). Ein diskretes Projektorbild $Z_P$ wird im Projektor (I) auf ein Beleuchtungsstärkemuster IP abgebildet. Abhängig von der Szenengeometrie wird $I_P$ aufgrund der Unschärfe des optischen Systems (II) Tiefpass gefiltert und an der Objektoberfläche (III) reflektiert. Das reflektierte Beleuchtungsstärkemuster $I_S$ wird ebenfalls wieder unscharf abgebildet (IV) und wird schlussendlich im Bildsensor (V) auf diskrete Werte $Z_C$ abgebildet.

Fig. 4 Die iterative Reflexionsschätzung. Das diskrete Projektormuster $Z_{Pi}$ ergibt ein Kamerabild $Z_{Ci}$ durch physikalische Bildentstehung (Fig 3). Für den Schätzprozess bilden wir $Z_{Pi}$ und $Z_{Ci}$ auf die jeweiligen Beleuchtungsstärkemuster ab (I und II). $I_{Pi}$ wird noch mit einem Tiefpass gefiltert (III), bevor wir die Reflektivität R der Szene abschätzen (IV). Mit nun bekanntem R und einer gewünschten Kamerabeleuchtungsstärke $\hat{I}_C$ sind wir nun in der Lage ein verbessertes Projektormuster $Z_{Pi+1}$ zu berechnen (V).

Fig. 5 Einen schematischen Projektor-Kamera Mikroskopaufbau mit 1 = PBS, 2 = Kondensor, 3= Lichtquelle, 4 = Projektorlinse, 5 = PBS, 6 = Okular, 7 = Kamera, 8 = Objektiv, 9 = Szene.

Fig. 6a und 6b Die geschätzte DRK für eine Metalloberfläche. Das Kamerabild (Fig. 6a) im Vergleich zur DRK nach einer Iteration (Fig. 6b).

Fig. 7a und 7b Fokusmaxima abgeschätzt auf den Kamerarohdaten (Fig. 7a) und auf den ermittelten DRKs (Fig. 7b). Die Eingabebilder entsprechen jenen von Fig. 5.

Nachfolgend wird ein kurzer Überblick über ein analytisches Modell der radiometrischen Abbildung in einem Projektor-Kamerasystem gegeben.

In dem Fall, dass ein Projektor als Lichtquelle für eine Szene eingesetzt wird, die von einer Kamera aufgenommen wird, existieren mehrere Beziehungen zwischen Projektor und Kamera. Erstens gibt es eine geometrische Abbildung zwischen Projektor und Kamera. In diesem Abschnitt nehmen wir an, dass diese Abbildung bekannt ist, d.h. wir wissen, welche Kamerapixel von einem einzelnen Projektorpixel betroffen sind und umgekehrt. Zweitens kann auch eine radiometrische Abbildung zwischen den Intensitäten des Projektors und den ermittelten Intensitäten auf der Kameraseite hergestellt werden, falls die Geometrie der Szene und ihre Oberflächencharakteristika bekannt sind. Dieser Abschnitt gibt einen kurzen Überblick über die wesentlichen Merkmale der Hauptkomponenten die für eine solche radiometrische Abbildung zwischen Projektor und Kamera notwendig sind.

Die notwendigen Grundlagen für die folgenden Abschnitte werden hier kurz vorgestellt:

Gegeben sei ein Projektor-Kamerasystem mit bekannten geometrischen Verhältnissen (siehe Fig 2a als Illustration): Ein Punkt der Szene S(x, y, z) wird von einem Projektorpixel mit den Koordinaten $(x_P, y_P)$ und der Intensität $Z_P(x_P,$

$y_P$) beleuchtet. Der Punkt S bildet sich auf die Bildkoordinaten ($x_C$, $y_C$) ab und resultiert in einer Intensität in der Kamera von $Z_C(x_C, y_C)$. Wir folgen [6] und formulieren die folgenden Beziehungen und Relationen:

$$I_C (x_C, y_C) = CRF (Z_C (x_C, y_C))/\Delta t \qquad (1)$$

$$I_P (x_P, y_P) = PRF (Z_P (x_P, y_P)) \qquad (2)$$

$$I_C (x_C, y_C) = I_P (x_P, y_P)R(x, y, z) \qquad (3)$$

R(x, y, z) steht für die Oberflächenreflektivität an Punkt S(x, y, z) wie in Fig. 2b beschrieben. CRF und PRF definieren die Kamera- und Projektorübertragungsfunktion. Die Übertragungsfunktionen sind nichtlinear, aber monoton steigend und stellen die Abbildung zwischen Beleuchtungsstärkewerten und diskreten Intensitätswerten her. Der skalare Wert $\Delta t$ steht für die Belichtungszeit der Kamera während der Bildaufnahme.

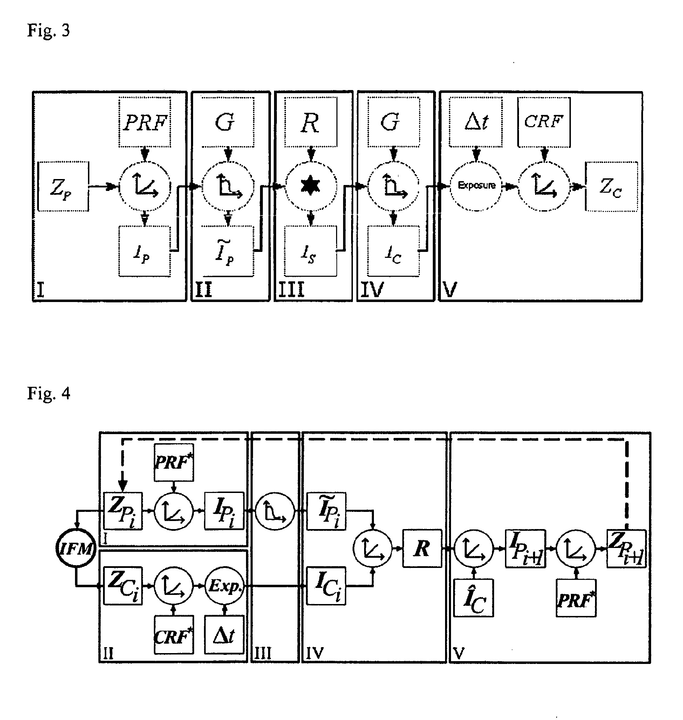

Die radiometrischen Beziehungen zwischen Kamera, Projektor und Oberflächenreflektivität sind in Fig. 3 dargestellt. Ein diskreter Wert der Projektorintensität ZP wird auf eine diskrete Kameraintensität ZC mittels der Abbildung auf eine Projektorbeleuchtungsstärke durch die PRF durchgeführt. Der Wert der Projektorbeleuchtungsstärke $I_P(x_P, y_P)$ wird an der Szene reflektiert und zwar entsprechend der Reflexivität R(x, y, z). Die daraus resultierende Kameraintensität $I_C(x_C, y_C)$ wird während der Belichtungszeit $\Delta t$ aufintegriert und anschließend auf den diskreten Kamerawert $Z_C(x_C, y_C)$ mittels der Funktion CRF abgebildet.

Methodik:

Der Dynamikbereich von Aufnahmen in der optischen Mikroskopie ist oftmals aufgrund von Spiegelungen und Schattierungseffekten an rauen Oberflächen sehr groß. Um gesättigte Bildbereiche zu vermeiden wird ein Projektor anstatt einer homogenen Lichtquelle eingesetzt. Der Projektor erlaubt die lokale Modulierung der Lichtintensität. Das bedeutet, dass für jedes Bild in einem Bilderstapel der für "shape from focus" verwendet wird, über- oder unterbelichtete Bildbereiche ausgeglichen werden können und so die Bildtextur extrahiert werden kann.

Eine Folge der nicht konstanten Bildbeleuchtung für die Bilder innerhalb eines Bilderstapels ist, dass sich das Fokusmaximum eines Objektpunktes aufgrund der sich ändernden Beleuchtungsmodulation verschieben wird, wenn man den Stapel mit traditionellen SFF Verfahren auswertet. Deshalb können die Kamerarohdaten in einem System mit adaptiver Beleuchtung nicht direkt für die Auswertung mittels SFF verwendet werden. Weiters erlaubt das fehlende Wissen über die Objektgeometrie keine exakten Aussagen über den Grad der Defokussierung eines projizierten Lichtmusters für bestimmte Objektpunkte. Aus diesem Grund kann ein und dasselbe Projektionsmuster auch nicht zur Bildaufnahme einer Szene für SFF verwendet werden, wenn die Tiefenwerte sich innerhalb eines Objektes ändern.

Um diese Probleme zu lösen, schlagen wir vor eine defokussierte Reflexionskarte mittels des Kamerabildes und des während der Bildaufnahme verwendeten Beleuchtungsmusters zu schätzen. Das verwendete Beleuchtungsmuster ist wahrscheinlich zumindest in einigen Bildregionen unscharf. Deshalb kann die Reflexionskarte nicht exakt bestimmt werden. Sie kann aber immer noch als ein beleuchtungsneutrales Bild der Objekttextur verwendet werden aus der die relativen Fokusmaxima des Bilderstapels extrahiert werden können.

Im Folgenden modellieren wir den Prozess der Bildentstehung in einem Mikroskop mit geringer Schärfentiefe und einem koaxial angeordneten Projektor als Lichtquelle (siehe Abschnitt Bildentstehungsmodell). Wir entwickeln einen Algorithmus zur Beleuchtungskompensation (siehe Abschnitt Schätzung von defocussierten Reflexionskarten) basierend auf dem Modell der Bildentstehung. Dieser Algorithmus minimiert die Dynamik der Szene aus Sicht der beobachtenden Kamera und liefert eine gute Schätzung der Szenenreflektivität inklusive Texturinformation. Diese Texturinformation wird dann für den "shape from focus" Algorithmus verwendet.

Bildentstehungsmodell:

Der Prozess der Bildentstehung ist in vier Teilabschnitten modelliert: Musterprojektion (I), optische Defokussierung (II, IV), Reflexion an einer texturierten Oberfläche (III) und Bildaufnahme (V). Im Folgenden werden diese Teilprozesse im Detail beschrieben.

Der Input für den Projektionsprozess ist ein diskretes Projektionsmuster $Z_P$. Abhängig von der Projektorübertragungsfunktion PRF wird das diskrete Bild auf Beleuchtungsstärkewerte $I_P$ transformiert. Das projizierte Muster wird nicht überall auf der Szene fokussiert abgebildet werden. Die optische Unschärfe wird durch eine Tiefpassfilterung (Faltung mit einem "pillbox kernel") modelliert. Der Radius des "pillbox kernel" entspricht dem Abstand der Fokusebene zum Objekt an jedem Pixel. Der Grad der Unschärfe hängt von der Oberflächengeometrie G ab, im Speziellen von der Tiefe an jedem Oberflächenpunkt. Die projizierten und unscharf abgebildeten Lichtstrahlen $\tilde{I}_P$ werden von der Oberfläche entsprechend der Reflexionsfunktion R, welche als linear angenommen wird, reflektiert.

Die reflektierten Lichtstrahlen $I_C$ erleiden die gleichen Unschärfeabbildungen wie die Projektormuster und werden somit zu $\tilde{I}_C$. Während der Bildaufnahme wird die reflektierte Beleuchtungsstärke über die Belichtungszeit $\Delta t$ aufintegriert. Die daraus resultierende Belichtungsintensität wird auf diskrete Bildintensitäten $Z_C$ mithilfe der nicht linearen Kameraübertragungsfunktion CRF abgebildet.

Debevec [17] hat eine Methode zur Bestimmung der CRF und, analog dazu, der PRF vorgeschlagen, ohne die Oberflächeneigenschaften zu kennen. Die verbleibenden unbekannten Variablen sind die Oberflächengeometrie, welche durch den "shape from focus" Algorithmus bestimmt werden soll, und die Reflexionseigenschaften der Oberfläche. Eine iterative Lösung zur 3D Rekonstruktion mit adaptiver Beleuchtung wird im nächsten Abschnitt vorgestellt.

Schätzung von defokussierten Reflexionskarten:

Wir schauen uns das Bildentstehungsmodell in Fig. 3 etwas genauer an. Lediglich das diskrete Projektionsmuster $Z_P$, die Belichtungszeit $\Delta t$ und das diskrete Kamerabild $Z_C$ sind bekannt. Obwohl die Kamera- und Projektorübertragungsfunktion nicht exakt bekannt sind, können wir über einen Vorab - Kalibrationsprozess [17] eine gute Schätzung (CRF*, PRF*) davon erlangen.

Zwei wichtige Komponenten sind unbekannt: die Geometrie der Szene und ihre Reflexionseigenschaften. Wir schauen uns zuerst den Schätzprozess für die Reflexionseigenschaften eines Pixels an. Wir definieren eine gewünschte Kamerabeleuchtungsstärke $\hat{I}_C$ (z.B. $\hat{I}_C$ = CRF (128)/$\Delta t$).

Für die Iteration i projizieren wir die Beleuchtungsstärke $I_{Pi}$ und erhalten dafür die Kamerabeleuchtungsstärke $I_{Ci}$. Mit Hilfe von Gleichung (3) berechnen wir $R_i$ aus $I_{Pi}$ und $I_{Ci}$. Aufgrund von möglichen Nichtlinearitäten in der Reflexionsfunktion oder aufgrund eines schlechten Startwertes von $I_{Pi}$ kann es sein dass $I_{Ci}$ von $\hat{I}_C$ abweicht. Wir wiederholen deshalb den Schätzprozess durch Berechnung von

$$I_{Pi}+1 \ = \hat{I}_C / R_i \,, \qquad\qquad (4)$$

für die nächste Iteration. Dieser Prozess wird solange wiederholt bis $|R_{i-1} - R_i|$ unter einen gewissen Schwellwert fällt.

Um diese Methode auf den zweidimensionalen Fall zu verallgemeinern, müssen wir unterschiedliche Auflösungen bei Projektor und Kamera berücksichtigen. Daraus ergibt sich, dass ein einzelnes Projektorpixel, welches im Idealfall eine rechteckige Lichtquelle darstellt, mehrere Kamerapixel beeinflusst, Aufgrund von Unschärfe- und Streueffekten beleuchtet ein einzelnes Projektorpixel nicht einen scharf abgegrenzten rechteckigen Bereich auf der Kamera. Wir modellieren die auf eine, zu einem Kamerapixel korrespondierende,

Oberflächenregion einfallende Beleuchtungsstärke, die von einem einzelnen Projektorpixel ausgeht, durch eine Punktantwortsfunktion (engl. "point spread function" PSF):

$$I_S (x_C, y_C ) = PSF_n (I_{P_n}, x_C, y_C), \qquad\qquad (5)$$

wobei $PSF_n (I, x, y)$ für den Wert der Punktantwortsfunktion des n-ten Projektorpixels an der Bildposition (x, y) steht und eine Projektorbeleuchtungsstärke I aufgebracht wurde. Wir verwenden einen sogenannten "thin-plate spline" zur Modellierung der PSF Funktionen und bestimmen deren exakte Parameter in einem Offline-Kalibrationsschritt. Der Einfluss aller N Projektorpixel auf eine einzelne Oberflächenregion ist gegeben durch:

$$I_S(x_C, y_C) = \sum_{n=1}^{N} PSF_n(I_{P_n}, x_C, y_C) \qquad\qquad (6)$$

Daraus folgt, dass die Abbildungsfunktion des Vektors aller Projektorbeleuchtungsstärken $\mathbf{I}_P$ auf den Vektor aller M Szenenbeleuchtungsstärken $\mathbf{I}_S$ gegeben ist durch die Beziehung

$$\mathbf{I_S} = \mathbf{A}\mathbf{I_P}. \qquad\qquad (7)$$

Die Abbildungsmatrix **A** hat die Dimension m × n. Die Abbildungsmatrix ist dünn besetzt, da ein einzelnes Projektorpixel lediglich einen Einfluss auf einen kleinen Ausschnitt der Bildszene hat.

Das inverse Problem, d.h. Abbildung der Szenenbeleuchtungsstärke auf Projektorbeleuchtungsstärke, kann aus Gleichung (7) abgeleitet werden. Die Lösung ergibt sich als jenes x welches $\|Ax - b\|$ für $Ax = b$ minimiert. Wir lösen Gleichung (7) nach **I**$_P$ im Sinne der kleinsten Fehlerquadrate mit Hilfe von Normalgleichungen indem wir folgenden Ausdruck berechnen

$$\mathbf{I}_P = \left(\mathbf{A}^T\mathbf{A}\right)^{-1}\mathbf{A}^T\mathbf{I}_S^T. \qquad\qquad (8)$$

Sowohl die Vorwärtsabbildungsmatrix A als auch die Rückwärtsabbildungsmatrix $(A^TA)^{-1} A^T$ können vorab berechnet werden.

Bisher haben wir angenommen, dass der Projektor und die Kamera perfekt fokussiert sind. In der Praxis ist diese Annahme aber aufgrund der unbekannten Oberflächengeometrie, die zudem meist nicht planar ist, nicht gültig. In unscharfen Bereichen sind sowohl die Projektorals auch die Kamerabeleuchtungsstärkemuster Tiefpass gefiltert und die PSF wird dadurch breiter. Deshalb kann die Reflexionskarte nicht exakt abgeschätzt werden. In extrem unscharfen Bereichen bereitet uns eine unpräzise Reflexionsschätzung wenig Sorgen, in nur leicht unscharfen Bereichen hingegen wird die Reflexionskarte verrauscht und beeinflusst deshalb die Suche nach dem Fokusmaximum durch "shape from focus". Deshalb wenden wir auf die projizierten Beleuchtungsstärkemuster zuerst einen Tiefpassfilter an, bevor wir die defokussierte Reflexionskarte bestimmen.

Experimente:

In diesem Abschnitt evaluieren wir den vorgeschlagenen Algorithmus sowohl an synthetischen Daten als auch an realen Daten. Wir zeigen, dass unser SFF Ansatz in nicht gesättigten Bildbereichen die gleichen Ergebnisse liefert wie ein Standard-SFF Ansatz, obwohl das projizierte Muster während der Aufnahme des Bilderstapels variiert. Die Experimente an realen Bilddaten zeigen, dass unser Ansatz dem klassischen SFF Ansatz in gesättigten Bildbereichen von hochdynamischen Szenen deutlich überlegen ist.

Synthetische Daten:

Wir generieren synthetische "shape from focus" Bilderstapel mit Hilfe des Bildentstehungsmodells (Fig. 3) auf der Basis von bekannter "ground truth". Wir nehmen für alle synthetischen Experimente an, dass es eine 1:1 Korrespondenz zwischen den Pixeln der Kamera und des Projektors gibt, um die Aufgabe etwas zu vereinfachen. Die Bildtextur an jedem Pixel wird zufällig anhand einer Gleichverteilungsfunktion generiert. Die Tiefe an jedem Pixel wird anhand des Modells einer horizontal geneigten Fläche welche sich vor der Kamera befindet, berechnet.

Der Bilderstapel wird durch einen, von der Tiefe abhängigen Tiefpassfilter, an jedem Szenepixel erzeugt. Weiters wird die Szene durch ein benutzerdefiniertes Muster, welches ebenfalls tiefenabhängig geglättet wird, beleuchtet. Ebenso wird angenommen, dass die Kamera- und Projektorübertragungsfunktionen bekannt sind.

Zwei Bilderstapel mit jeweils 21 Bildern und variierender Beleuchtung werden erzeugt: Zuerst, wird ein einheitliches und konstantes Muster für die Szenenbeleuchtung gewählt. Dann wird die Szene für jedes aufgenommene Bild mit einem zufälligen Muster beleuchtet.

Ein klassischer SFF Algorithmus [1], der den quadratischen Laplaceoperator als Fokusmaß verwendet, wird nun beim ersten Bilderstapel auf die rohen Bilddaten und beim zweiten Bilderstapel auf die geschätzten DRKs angewendet.

Beim ersten Bilderstapel beträgt der relative Fehler zwischen der Tiefenkarte welche durch den Standardalgorithmus erzeugt wurde und der bekannten "ground truth" Tiefenkarte 14.3% der verwendeten Schrittweite (Standardabweichung 12.6%). Beim zweiten Bilderstapel beträgt der relative Unterschied zwischen der "ground truth" Tiefenkarte und unserem Ansatz 16.4% (Standardabweichung 17.1%).

Reale Daten:

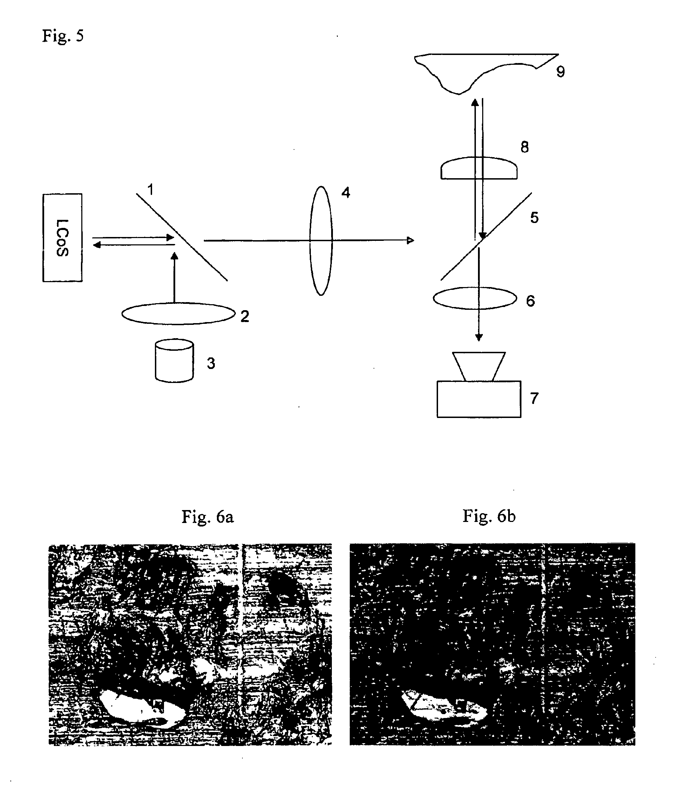

Für die Experimente mit realen Daten bauten wir einen Mikroskopprototyp mit einem Projektor als koaxialer Beleuchtung (siehe Fig. 5.2) auf einer Optikbank auf. Wir verwendeten eine 2MP Monochromkamera und ein 1280x720 Pixel LCos Display zur Lichtmodulation. Eine hochpräzise Linearachse verschiebt die Probe mit einer Genauigkeit von 1 $\mu$m. Für die Experimente wählten wir einen Kameraausschnitt von 574x420 Pixel welcher 75x60 Projektorpixel entspricht. Die Kamera und der Projektor teilen sich die gleiche Fokusebene. Die geometrischen und radiometrischen Beziehungen zwischen Kamera und Projektor werden vorab kalibriert.

Um die Rekonstruktionsgenauigkeit auf den geschätzten DRKs zu evaluieren, vergleichen wir die Stabilität des Fokusmaximums des Standard SFF Algorithmus bzgl. eines nicht gesättigten Bilderstapels mit unseren Resultaten. Jedes Pixel das irgendwo im Referenzbilderstapel gesättigt oder nahezu gesättigt ist wird aus maskiert.

In einem ersten Experiment zeigen wir, dass unser Ansatz in der Lage ist zufällige, während der Bildaufnahme, projizierte Muster zu verkraften. Die Szene bei diesem Experiment ist eine ebene Probe die schräg vor dem Mikroskop platziert wurde. Während der Bildaufnahme wird nach jedem Tiefenschritt ein unterschiedliches Muster projiziert und ein Bild aufgenommen. Wir verwenden die vorgeschlagene Kontrollschleife um eine Reflexionskarte für die Szene abzuschätzen. Für den Referenzbilderstapel wird zusätzlich noch ein Bild mit einheitlicher und konstanter Beleuchtung aufgenommen.

Sowohl von den DRKs als auch vom Referenzbilderstapel werden Tiefenkarten berechnet. Insgesamt sind 96.97% der Kamerapixel in der Auswerteregion in beiden Bilderstapeln nicht gesättigt und können demzufolge für die Auswertung herangezogen werden. Der gemittelte relative Fehler zwischen der auf klassische Weise berechneten Tiefenkarte und unserem Ansatz beträgt -0.02$\mu$m (Standardabweichung 0.81$\mu$m). Die Schrittweite $\Delta$d zwischen zwei aufeinander folgenden Bildern während der Bildaufnahme beträgt 5$\mu$m. Bei einem durchschnittlichen relativen Fehler von 0.4% für die Schrittweite ergibt sich somit keine kritische systematische Abweichung zwischen den zwei Verfahren für nicht gesättigte Bildpunkte.

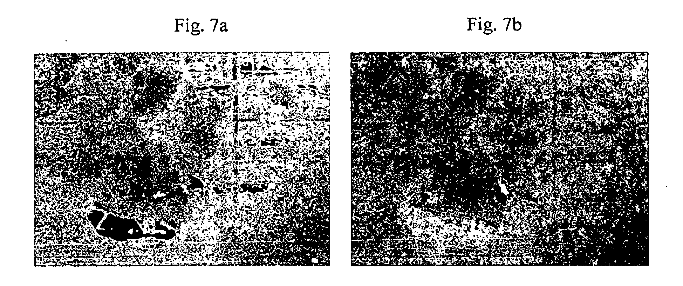

Der Vorteil der adaptiven Beleuchtung in Bezug auf "shape from focus" wird dann sichtbar, wenn wir eine hochdynamische Szene, wie z.B. in Fig. 5.2, messen. Der klassische Ansatz liefert in den problematischen Bereichen stark verrauschte Ergebnisse (siehe Fig. 7a). Im Gegensatz dazu ist SFF auf DRKs in der Lage Schattierungs- und Sättigungseffekte besser zu beherrschen. Fig. 7b zeigt eine dichte Rekonstruktion basierend auf DRKs, die in nur einer Iteration abgeschätzt wurden. D.h. es wurden nur zwei Bilder pro Tiefenschritt aufgenommen.

In dieser Arbeit haben wir gezeigt, dass es möglich ist, beleuchtungsneutrale Bilder in einem Kamera-Projektor-Mikroskopaufbau, abzuschätzen. Wir ermitteln die defokussierten Reflexionskarten (DRKs) iterativ aus sehr wenigen (z.B. nur zwei) Bildaufnahmen. Die DRKs verwenden wir als Eingabe für einen Standard "shape from focus" Algorithmus um Tiefenbilder zu berechnen. Unsere Experimente zeigen, dass wir in nicht gesättigten Bildbereichen die gleichen Fokusmaxima wie der traditionelle SFF Ansatz erhalten, obwohl wir die Beleuchtungsmuster für die Bildaufnahme bei jedem Tiefenschritt variiert haben. Zusätzlich sind wir aber auch in der Lage Schattierungseffekte und Spiegelungen wesentlich besser zu beherrschen als der klassische Ansatz.

Im Augenblick sind die limitierenden Faktoren unseres Verfahrens noch der hohe Berechnungs- und Speicheraufwand und dass wir effektiv die Anzahl der aufgenommenen Bilder verdoppeln. Wir schlagen vor dieses Problem dadurch zu lösen, dass wir das Beleuchtungsmuster des vorhergehenden Tiefenschrittes als initiales Kompensationsmuster für den aktuellen Tiefenschritt verwenden. Zusätzlich können auch Verfahren von "shape from defocus" dazu verwendet werden, um den Grad der Defokussierung für bestimmte Szenenpunkte abzuschätzen, und somit die DRK Schätzung mit zusätzlichem Vorwissen auszustatten.

Es wird eine neuartige Methode vorgestellt um Beleuchtungsdefizite bei "Shape from Focus (SFF)" in Mikroskopbildern auszugleichen. Oberflächentextur ist in mikroskopischen Aufnahmen häufig vorhanden, kann aber nicht immer genützt werden, da die Bilddynamik in der Szene häufig zu hoch ist und die Textur nicht immer sichtbar ist. Als Konsequenz davon kann die Tiefeninformation in gesättigten oder zu dunklen Bildbereichen mit Hilfe von SFF nicht robust ermittelt werden. Um diese Einschränkung zu umgehen, wird in einem ersten Schritt die Reflexivität der Szene mit Hilfe eines Kamera-Projektorsystems abgeschätzt und der SFF Algorithmus anschließend auf die so ermittelten Reflexionskarten anstatt auf die ursprünglichen Bilddaten angewandt. Wir lösen dieses schlecht-konditionierte Schätzproblem auf iterative Art durch die Projektion eines adaptiven Beleuchtungsmusters und wir weißen experimentell nach, dass das Maximum der Fokusfunktion durch diese Vorgangsweise stabil bleibt und in gesättigten Regionen sogar robuster bestimmbar wird.

Referenzen:

1. Nayar, S.: Shape from Focus System. In: IEEE Conference on Computer Vision and Pattern Recognition (CVPR).

(1992) 302-308

2. Nayar, S., Nakagawa, Y.: Shape from Focus: An Effective Approach for Rough Surfaces. In: Int. Conf. on Robotics and Automation. Volume 1. (1990) 218-225

3. Nayar, S., Nakagawa, Y.: Shape from focus. Pattern Analysis and Machine Intel- ligence, IEEE Transactions on 16 (1994) 824 -831

4. Helmli, F., Scherer, S.: Adaptive shape from focus with an error estimation in light microscopy. (2001) 188 -193

5. Malik, A., Choi, T.: A novel algorithm for estimation of depth map using image focus for 3d shape recovery in the presence of noise. 41 (2008) 2200-2225

6. Koninckx, T.P., Peers, P., Dutre, P., Van Gool, L.: Scene-adapted structured light. In: CVPR '05: Proceedings of the 2005 IEEE Computer Society Conference on Computer Vision and Pattern Recognition (CVPR'05) - Volume 2, Washington, DC, USA, IEEE Computer Society (2005) 611-618

7. Koninckx, T., Van Gool, L.: Real-time range acquisition by adaptive structured light. Pattern Analysis and Machine Intelligence, IEEE Transactions on 28 (2006) 432-445

8. Gu, J., Nayar, S., Grinspun, E., Belhumeur, P., Ramamoorthi, R.: Compressive structured light for recovering inhomogeneous participating media. In: ECCV08. (2008) 845-858

9. Fujii, K., Grossberg, M.D., Nayar, S.K.: A projector-camera system with real-timephotometric adaptation for dynamic environments. In: CVPR '05: Proceedings of the 2005 IEEE Computer Society Conference on Computer Vision and Pat- tem Recognition (CVPR'05) - Volume 2, Washington, DC, USA, IEEE Computer Society (2005) 1180

10. Grossberg, M., Peri, H., Nayar, S., Belhumeur, P.: Making one object look like another: Controlling appearance using a projector-camera system. In: CVPR04. (2004) 452-459

11. Grundhofer, A., Bimber, O.: Real-time adaptive radiometric compensation. IEEE Transactions on Visualization and Computer Graphics 14 (2008) 97-108

12. Bimber, O., Emmerling, A., Klemmer, T.: Embedded entertainment with smart projectors. In: SIGGRAPH '05: ACM SIGGRAPH 2005 Courses, New York, NY, USA, ACM (2005) 8

13. Wetzstein, G., Bimber, O.: Radiometric compensation of global illumination ef- fects with projector-camera systems. In: SIGGRAPH '06: ACM SIGGRAPH 2006 Research posters, New York, NY, USA, ACM (2006) 38

14. Noguchi, M., Nayar, S.: Microscopic shape from focus using active illumination. (1994) A:147-152

15. Samson, E.C., Blanca, C.M.: Dynamic contrast enhancement in widefield mi- croscopy using projector-generated illumination patterns. New Journal of Physics 9 (2007)

16. Bimber, O., Klock, D., Amano, T., Grundhofer, A., Kurz, D.: Closed-loop feedback illumination for optical inverse tone-mapping in light microscopy. In: To appear in IEEE Transactions on Visualization and Computer Graphics. (2010)

17. Debevec, P., Malik, J.: Recovering high dynamic range radiance maps from pho- tographs. (1997) 369-378

**Patentansprüche**

1. Verfahren zum Ausgleichen von Beleuchtungsdefiziten bei mikroskopischem "Shape from Focus (SFF)", **dadurch gekennzeichnet, dass** zuerst die Reflexivität der Szene mittels eines Projektor-Kamera-Systems abgeschätzt wird, und dann mikroskopisches "Shape from Focus (SFF)" auf einen Stapel von Reflexionskarten anstatt auf die ursprünglichen Bilddaten angewandt wird.

2. Verfahren nach Anspruch 1, **dadurch gekennzeichnet, dass** die Abschätzung iterative Projektion eines adaptiven Beleuchtungsmusters umfasst.

3. Verfahren nach Anspruch 1 oder 2, **dadurch gekennzeichnet, dass** die mikroskopische Szene von einer adaptiven Beleuchtungsquelle, z.B. einem Mikroprojektor, beleuchtet wird.

**Claims**

1. A method for compensating illumination deficiencies in microscopic "shape from focus (SFF)", **characterized in that** there is firstly estimated the reflectance of the scene by way of a projector-camera system and then microscopic "shape from focus (SFF)" is applied to a stack of reflectance maps instead of to the original image data.

2. A method according to claim 1, **characterized in that** the estimation comprises iterative projection of an adaptive illumination pattern.

3. A method according to claim 1 or 2, **characterized in that** the microscopic scene is illuminated by an adaptive illumination source, e.g., a micro-projector.

**Revendications**

1. Procédé destiné à la compensation de déficits d'éclairage dans des « shape from focus » (SFF) microscopiques, **caractérisé en ce qu'**en premier lieu, la réflexivité de la scène est évaluée au moyen d'un système projecteur-caméra, et qu'ensuite le « shape from focus » (SFF) microscopique est appliqué sur un empilage de cartes de réflexion au lieu d'être appliqué sur les données originelles.

2. Procédé selon la revendication 1, **caractérisé en ce que** la compensation comprend la projection itérative d'un motif d'éclairage adaptatif.

3. Procédé selon les revendications 1 ou 2, **caractérisé en ce que** la scène microscopique est éclairée par une source d'éclairage adaptative, par exemple, un micro projecteur.

Fig. 1a

Fig. 1b

Fig. 2a

Fig. 2b

Fig. 3

Fig. 4

Fig. 5

Fig. 6a

Fig. 6b

Fig. 7a

Fig. 7b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5381236 A


**In der Beschreibung aufgeführte Nicht-Patentliteratur**

- **NAYAR, S.** Shape from Focus System. *IEEE Conference on Computer Vision and Pattern Recognition (CVPR,* 1992, 302-308
- **NAYAR, S. ; NAKAGAWA, Y.** Shape from Focus: An Effective Approach for Rough Surfaces. *Int. Conf. on Robotics and Automation,* 1990, vol. 1, 218-225
- **NAYAR, S. ; NAKAGAWA, Y.** Shape from focus. Pattern Analysis and Machine Intel- ligence. *IEEE Transactions,* 1994, vol. 16, 824-831
- **HELMLI, F. ; SCHERER, S.** *Adaptive shape from focus with an error estimation in light microscopy,* 2001, 188-193
- **MALIK, A. ; CHOI, T.** *A novel algorithm for estimation of depth map using image focus for 3d shape recovery in the presence of noise,* 2008, vol. 41, 2200-2225
- Scene-adapted structured light. **KONINCKX, T.P. ; PEERS, P. ; DUTRE, P. ; VAN GOOL, L.** CVPR '05: Proceedings of the 2005 IEEE Computer Society Conference on Computer Vision and Pattern Recognition (CVPR'05. IEEE Computer Society, 2005, vol. 2, 611-618
- **KONINCKX, T. ; VAN GOOL, L.** Real-time range acquisition by adaptive structured light. *Pattern Analysis and Machine Intelligence, IEEE Transactions,* 2006, vol. 28, 432-445
- **GU, J. ; NAYAR, S. ; GRINSPUN, E. ; BELHUMEUR, P. ; RAMAMOORTHI, R.** Compressive structured light for recovering inhomogeneous participating media. *ECCV08.,* 2008, 845-858
- A projector-camera system with real-time photometric adaptation for dynamic environments. **FUJII, K. ; GROSSBERG, M.D. ; NAYAR, S.K.** CVPR '05: Proceedings of the 2005 IEEE Computer Society Conference on Computer Vision and Pat- tem Recognition (CVPR'05. IEEE Computer Society, 2005, vol. 2, 1180

- **GROSSBERG, M. ; PERI, H. ; NAYAR, S. ; BELHUMEUR, P.** Making one object look like another: Controlling appearance using a projector-camera system. *CVPR04,* 2004, 452-459
- **GRUNDHOFER, A. ; BIMBER, O.** Real-time adaptive radiometric compensation. *IEEE Transactions on Visualization and Computer Graphics,* 2008, vol. 14, 97-108
- Embedded entertainment with smart projectors. **BIMBER, O. ; EMMERLING, A. ; KLEMMER, T.** SIGGRAPH '05: ACM SIGGRAPH 2005 Courses. ACM, 2005, 8
- Radiometric compensation of global illumination effects with projector-camera systems. **WETZSTEIN, G. ; BIMBER, O.** SIGGRAPH '06: ACM SIGGRAPH 2006 Research posters. ACM, 2006, 38
- **NOGUCHI, M. ; NAYAR, S.** Microscopic shape from focus using active illumination. *Microscopic shape from focus using active illumination,* 1994, vol. A, 147-152
- **SAMSON, E.C. ; BLANCA, C.M.** Dynamic contrast enhancement in widefield mi- croscopy using projector-generated illumination patterns. *New Journal of Physics,* 2007, 9
- **BIMBER, O. ; KLOCK, D. ; AMANO, T. ; GRUNDHOFER, A. ; KURZ, D.** Closed-loop feedback illumination for optical inverse tone-mapping in light microscopy. *To appear in IEEE Transactions on Visualization and Computer Graphics,* 2010
- **DEBEVEC, P. ; MALIK, J.** *Recovering high dynamic range radiance maps from pho- tographs,* 1997, 369-378